# EUROPÄISCHE PATENTSCHRIFT

(11) **EP 1 084 209 B1**
(45) Veröffentlichungstag und Bekanntmachung des Hinweises auf die Patenterteilung: **03.09.2003**
(21) Anmeldenummer: 99922185.6
(22) Anmeldetag: 06.05.1999
(51) Int. Cl.: C09K 19/00, C09B 67/00, C09D 5/36

(54) **MEHRSCHICHTIGE CHOLESTERISCHE PIGMENTE**
MULTILAYER CHOLESTERIC PIGMENTS
PIGMENTS CHOLESTERIQUES MULTICOUCHES

(30) Priorität: 06.05.1998 DE 19820225
(43) Veröffentlichungstag der Anmeldung: 21.03.2001
(73) Patentinhaber: BASF AKTIENGESELLSCHAFT, 67056 Ludwigshafen (DE)
(72) Erfinder: SCHUHMACHER, Peter, D-68163 Mannheim (DE); SCHNEIDER, Norbert, D-67122 Altrip (DE); SCHMID, Raimund, D-67435 Neustadt (DE); BEST, Wolfgang, D-67251 Freinsheim (DE); BLASCHKA, Peter, D-67069 Ludwigshafen (DE); MEYER, Frank, D-69115 Heidelberg (DE)
(74) Vertreter: Kinzebach, Werner, Dr.
(86) Internationale Anmeldenummer: EP9903106
(87) Internationale Veröffentlichungsnummer: WO99057223

(56) Entgegenhaltungen:
- EP-A- 0 404 639
- EP-A- 0 872 336
- EP-A- 0 892 023
- WO-A-99/11719
- DE-A- 19 619 973
- GB-A- 2 276 883

## Beschreibung

Die Erfindung betrifft mehrschichtige cholesterische Pigmente, Verfahren zu ihrer Herstellung und ihre Verwendung.

Beim Erwärmen formanisotroper Stoffe können flüssigkristalline Phasen, sogenannte Mesophasen, auftreten. Die einzelnen Phasen unterscheiden sich durch die räumliche Anordnung der Molekülschwerpunkte einerseits sowie durch die Molekülanordnung hinsichtlich der Längsachsen andererseits. Die nematisch flüssigkristalline Phase zeichnet sich durch Parallelorientierung der Molekül-Längsachsen aus (eindimensionaler Ordnungszustand). Unter der Voraussetzung, daß die die nematische Phase aufbauenden Moleküle chiral sind, entsteht eine sogenannte chiral nematische (cholesterische) Phase, bei der die Längsachsen der Moleküle eine zu ihr senkrechte, helixartige Überstruktur ausbilden. Der chirale Molekülteil kann sowohl im flüssigkristallinen Molekül selbst vorhanden sein als auch als Dotierstoff zur nematischen Phase gegeben werden, wodurch die chiral nematische Phase induziert wird. Dieses Phänomen wurde zuerst an Cholesterolderivaten untersucht.

Die chiral nematische Phase hat besondere optische Eigenschaften: eine hohe optische Rotation sowie einen ausgeprägten Zirkulardichroismus, der durch Selektivreflektion von zirkular polarisiertem Licht innerhalb der chiral nematischen Schicht entsteht. In Abhängigkeit von der Ganghöhe der helixartigen Überstruktur können unterschiedliche Farben erzeugt werden, die je nach Blickwinkel unterschiedlich erscheinen können. Die Ganghöhe der helixartigen Überstruktur ist ihrerseits vom Verdrillungsvermögen der chiralen Komponente abhängig. Dabei kann insbesondere durch Änderung der Konzentration eines chiralen Dotierstoffs die Ganghöhe und damit der Wellenlängenbereich des selektiv reflektierten Lichts einer chiral nematischen Schicht variiert werden. Solche chiral nematischen Systeme bieten für eine praktische Anwendung interessante Möglichkeiten.

Cholesterische Effektpigmente und Zusammensetzungen, die solche Pigmente enthalten, sind bekannt.

Die EP-B-383 376 beschreibt Flüssigkristallpigmente, die plättchenförmige Trägerpartikel umfassen, die wenigstens teilweise mit flüssigkristallinem Material beschichtet sind. Die Beschichtung erfolgt durch Dispergieren der plättchenförmigen Partikel in einem Lösungsmittel, in dem flüssigkristallines Material gelöst ist und nachfolgendes Ausfällen wenigstens eines Teils des flüssigkristallinen Materials auf die Partikel. Die plättchenförmigen Trägerpartikel werden dabei mit dem Cholester teilweise oder vollständig umhüllt. Gleichmäßige und exakt parallel zur mittleren Schicht angeordnete cholesterische Schichten sind mittels dieses Verfahrens nicht herstellbar. Die Pigmente sind offensichtlich auch nicht volldeckend, da sie vorzugsweise auf schwarze Oberflächen aufgetragen werden sollen.

Die DE-A-196 19 973 skizziert, in nicht nacharbeitbarer Weise, ein Konzept zwei- bzw. dreischichtiger plättchenförmiger Interferenzpigmente. Die Pigmente sollen zumindest eine Lage aufweisen, die aus flüssigkristallinen Polymeren besteht, deren Mesogene zumindest näherungsweise chiral-nematisch und/oder smektisch und/ oder cholesterisch geordnet sind. Außerdem ist in den Interferenzpigmenten eine lichtabsorbierende Lage vorgesehen, die zumindest für einen Teil des sichtbaren Lichtspektrums absorbierend ist. Die Pigmente sollen durch Rakeln, Aufwalzen oder Aufsprühen auf eine glatte Unterlage, Aushärten des so erzeugten dünnen Filmes, Aufbringen der lichtabsorbierenden Lage, Aushärten dieser lichtabsorbierenden Lage, gegebenenfalls Aufbringen und Aushärten eines weiteren, nach Zusammensetzung und Lagenstärke mit dem ersten Film übereinstimmenden Filmes, sowie Abziehen und Zerkleinern des ausgehärteten Lagenverbundes erhältlich sein. Konkrete Pigmente werden jedoch nicht offenbart. Im Hinblick auf die stoffliche Zusammensetzung der Pigmente wird lediglich gesagt, dass als flüssigkristalline Polymere "flüssigkristalline Hauptoder Seitenketten-Polymere oder Mischungen davon, flüssigkristalline Oligomere oder Oligomermischungen oder flüssigkristalline Monomere oder Monomermischungen in Betracht" kommen. Beispiele zur Herstellung der Pigmente oder die Pigmente enthaltender Lackformulierungen fehlen. Die Offenbarung der DE-A-196 19 973 erschöpft sich daher in rein theoretischen Erörterungen des Konzeptes zwei- oder dreischichtiger Pigmente. Es wird somit keine für den Fachmann nacharbeitbare technische Lehre bereitgestellt.

Die WO 94/22976 beschreibt zweischichtige cholesterische Pigmente auf der Basis von zwei verschiedenen Polyorganosiloxanen der Firma Wacker. Die Herstellung der Pigmente erfolgt in extrem aufwendiger Weise durch separates Beschichten zweier zuvor mit Nylon beschichteter Glasplatten mit Lösungen der oben genannten Flüssigkristalle; Reiben jeder Flüssigkristallschicht, um diese zu orientieren; Anbringen thermisch deformierbarer Spacer auf den Glasplatten; Aufeinanderlegen der Glasplatten mit einander zugewandten cholesterischen Schichten und Vereinigung der cholesterischen Schichten durch thermische Deformation der Spacer bei erhöhter Temperatur im Vakuum sowie Vernetzen der vereinigten Cholesterschichten. Der so erhältliche Film soll, wie auch die aus ihm durch Mahlen erhältlichen Pigmente, eine Dicke von ungefähr 10 µm aufweisen. Der Film löst sich offensichtlich trotz der vorherigen Beschichtung der Glasplatten mit Nylon nur unvollständig von den Glasplatten, so daß Reste des Films zur Gewinnung der Pigmente von den Platten abgekratzt werden müssen, was die Herstellung der Pigmente noch aufwendiger gestaltet. Das Konzept dreischichtiger Pigmente wird lediglich skizziert. Diese Pigmente sind durch das für zweischichtige Pigmente beschriebene Herstellungsverfahren nicht herstellbar. Die WO 94/22976 stellt somit keine für den Fachmann nacharbeitbare technische Lehre bereit, die Dreischichtpigmente in irgendeiner Weise verfügbar machen würde. Die Offenbarung erschöpft sich in rein theoretischen Erörterungen des Aufbaus von dreischichtigen Pigmenten.

Aus der älteren DE-A-197 57 699 sind plättchenförmige cholesterische Mehrschichtpigmente bekannt, die mindestens zwei cholesterische Schichten und mindestens eine diese cholesterische Schichten voneinander trennende Zwischenschicht aufweisen, die das die cholesterische Schicht transmittierende Licht teilweise oder vollständig absorbiert. Wird diese absorbierende Zwischenschicht volldeckend eingestellt, ist bei ausreichender Pigmentierungshöhe der Farbeindruck des Pigmentes völlig untergrundunabhängig, weshalb solche Pigmente grundsätzlich beispielsweise für die Verwendung in Automobillacken sehr gut geeignet sind.

Andere aus dem Stand der Technik bekannte cholesterische Interferenzpigmente müssen für die Absorption des transmittierenden Wellenlängenbereiches entweder zusätzliche Pigmente in der Cholestermatrix enthalten oder auf einen farbigen Untergrund aufgebracht werden. Beim Einbau von Fremdpigmenten in die flüssigkristalline Masse ist von Nachteil, dass durch Absorption und Streulicht ein erheblicher Teil des reflektierenden Wellenbereiches absorbiert bzw. gestreut wird, so dass der besondere Vorteil der Interferenzpigmente auf cholesterischer Basis weitgehend aufgehoben wird. Das gleiche Problem tritt auf, wenn man cholesterische Pigmente mit absorbierenden Pigmenten in Lackzubereitungen einmischt. Farbeindruckstörende Reflexionen sind nur vermeidbar, wenn das absorbierende Pigment möglichst feinteilig in die Cholestermatrix eindispergiert wird. Nach allgemeinen Erfahrungen gelingt dies nur, wenn das Pigment mit eigens auf die Pigmentoberfläche abgestimmten Additiven dispergiert wird. Diese Verbindungen, wie z. B. Fettsäuren, Salze der Fettsäuren, Sojalecithine oder Phosphorsäureester stören jedoch die Ausbildung der helikalen Orientierung und verhindern damit eine optimale Farbausbildung. Erfolgt die Absorption dagegen über eine farbige Unterschicht, ist eine gleichmäßig hohe Untergrundqualität notwendig, um den erwünschten Gesamteindruck der Effektbeschichtung zu erzielen. Daher muss ein erheblicher Aufwand zur Vorbehandlung des Untergrundes getrieben werden. Ein idealer Untergrund für maximale Brillanz müsste schwarz/spiegelglänzend beschaffen sein, was beispielsweise bei Autokarosserien nur sehr schwierig zu realisieren ist.

Der Erfindung liegt daher die Aufgabe zugrunde, Effektpigmente bereitzustellen, welche die beschriebenen Nachteile des Standes der Technik nicht mehr aufweisen.

Überraschenderweise wurde gefunden, dass die der Erfindung zugrunde liegende Aufgabe durch ein mehrschichtiges Pigment gelöst wird, das mindestens eine teilweise lichtdurchlässige Schicht, unter dieser mindestens eine cholesterische Schicht und gewünschtenfalls unter dieser mindestens eine weitere teilweise lichtdurchlässige Schicht enthält.

Gegenstand der vorliegenden Erfindung ist somit ein plättchenförmiges cholesterisches Mehrschichtpigment, das durch das Aufeinanderfolgen der Schichten A/B/und gegebenenfalls C gekennzeichnet ist,
wobei
A und C unabhängig voneinander für mindestens eine teilweise lichtdurchlässige Absorptionsschicht stehen und
B für mindestens eine cholesterische Schicht steht.

Das erfindungsgemäße Mehrschichtpigment bietet eine Reihe überraschender Vorteile:
a) A und/oder C können sehr dünn aufgebracht werden, so dass die Pigmente gegenüber LC-Pigmenten nach dem Stand der Technik ein günstigeres Durchmesser-Dicken-Verhältnis aufweisen.
b) Die dünnen Pigmentplättchen sind insbesondere in einem Automobil-Basislack besser ausrichtbar als LC-Pigmente nach dem Stand der Technik.
c) Die Pigmente sind stärker glänzend als die LC-Pigmente nach dem Stand der Technik, so dass beispielsweise in einer Automobillackierung weniger Klarlack auf die Basislackschicht aufgetragen werden muss.
d) Das Deckvermögen der Pigmente ist dem der Pigmente nach dem Stand der Technik gleichwertig oder überlegen, da pro Volumeneinheit Lack wesentlich mehr erfindungsgemäße Pigmentpartikel eingesetzt werden können.
e) Der Einsatz halbtransparenter Pigmente ermöglicht Lackierungen mit Tiefenwirkung, die einen perlartig schimmernden Effekt aufweisen.
f) A und/oder C können gleich oder unterschiedlich gefärbt sein, was viele Kombinationen von Interferenzfarben und Absorptionsfarben ermöglicht. So können beispielsweise Schichten A und/oder C, die im blauen Wellenlängenbereich absorbieren, aus einem winkelabhängigen Farbenspiel der Schicht B Blautöne ausschneiden.

A und/oder C enthalten vorzugsweise absorbierende Farbmittel. Diese können in pigmentöser Form oder gelöst als Farbstoff in einer anorganischen oder organischen Bindemittelmatrix vorliegen. Das Absorptionspigment kann ein überfärbtes Weißpigment, ein Buntpigment oder vorzugsweise ein Schwarzpigment sein. Geeignet sind nichtabsorbierende Pigmente (Weißpigmente), die mit absorbierenden Farbmitteln (Farbstoffen oder farbigen Pigmenten) vermischt sind, beispielsweise TiO₂, ZrO₂, Al₂O₃, SiO₂, ZnO und SnO₂. Bevorzugt eingesetzt werden selektiv oder nichtselektiv absorbierende Pigmente. Unter den selektiv absorbierenden Pigmenten sind insbesondere Eisenoxide, Chromate, Vanadate und Sulfide zu nennen; unter den nichtselektiv absorbierenden insbesondere schwarzes Fe₃O₄ (Magnetit) und Ruß.

Geeignete organische Absorptionspigmente sind beispielsweise Azopigmente, Metallkomplex-Pigmente, wie Azo- und Azomethin-Metallkomplexe, Isoindolinon- und Isoindolin-Pigmente, Phthalocyanin-Pigmente, Chinakridon-Pigmente, Perinon- und Perylen-Pigmente, Anthrachinon-Pigmente, Diketopyrrolopyrrol-Pigmente, Thioindigo-Pigmente, Dioxazin-Pigmente, Triphenylmethan-Pigmente, Chinophthalon-Pigmente und fluoreszierende Pigmente.

Besonders geeignet sind feinteilige Absorptionspigmente mit einer mittleren Teilchengröße von 0,01 bis 1 µm, vorzugsweise 0,01 bis 0,1 µm.

Bevorzugt einsetzbar sind Graphitpigmente oder verschiedene Rußtypen, ganz besonders bevorzugt leicht dispergierbare Farbruße mit einer spezifischen Oberfläche von 30 bis 150 m²/g (BET-Methode) und einem Absorptionsvermögen von 50 bis 100 ml Dibutylphthalat/100 g (DBP-Zahl).

Geeignete Absorptionspigmente sind auch solche, die A und/oder C magnetische Eigenschaften verleihen. Hierfür geeignet sind beispielsweise γ-Fe₂O₃, Fe₃O₄, CrO₂ oder ferromagnetische Metallpigmente, wie z. B. Fe-, Fe-Cu-, Fe-Ni-Co-Legierungen.

Absorptionsfarbstoffe, die in A und/oder C enthalten sein können, sind grundsätzlich alle selektiv oder nicht selektiv absorbierenden Farbstoffe, die in den erfindungsgemäß einsetzbaren anorganischen oder organischen Bindemitteln löslich sind und die Eigenschaften der Schicht, in denen sie enthalten sind, nicht nachteilig beeinflussen. Geeignete Farbstoffe sind beispielsweise Monoazofarbstoffe sowie deren Metallsalze, Disazofarbstoffe, kondensierte Disazofarbstoffe, Isoindolin-Derivate, Derivate der Naphthalin- oder Perylentetracarbonsäure, Anthrachinonfarbstoffe, Thioindigo-Derivate, Azomethin-Derivate, Chinacridone, Dioxazine, Pyrazolochinazolone, Phtalocyaninfarbstoffe oder basische Farbstoffe wie Triarylmethanfarbstoffe und deren Salze.

Die Absorptionspigmente bzw. -farbstoffe sind vorzugsweise in eine organische Bindemittelmatrix eingebunden bzw. in einer solchen gelöst. Als Bindemittel können die lacküblichen Systeme eingesetzt werden. Vorzugsweise eignen sich strahlungshärtbare Systeme, die reaktive, vernetzungsfähige Gruppen, wie Acryl-, Methacryl-, α-Chloracryl-, Vinyl-, Vinylether-, Epoxid-, Cyanat-, Isocyanat- oder Isothiocyanatgruppen enthalten.

Als Bindemittel sind auch monomere Mittel und deren Mischungen mit polymeren Bindemitteln einsetzbar. Als monomere Mittel kommen bevorzugt solche in Betracht, die zwei oder mehr vernetzungsfähige Gruppen wie Acryl-, Methacryl-, α-Chloracryl-, Vinyl-, Vinylether-, Epoxid-, Cyanat-, Isocyanat- oder Isothiocyanatgruppen enthalten. Besonders bevorzugt sind Acryl-, Methacryl- oder Vinylethergruppen. Monomere Mittel mit zwei vernetzungsfähigen Gruppen sind beispielsweise die Diacrylate, die Divinylether oder die Dimethacrylate von Diolen wie beispielsweise Propandiol, Butandiol, Hexandiol, Ethylenglykol, Diethylenglykol, Triethylenglykol oder Tetrapropylenglykol.

Monomere Mittel mit drei vernetzungsfähigen Gruppen sind beispielsweise die Triacrylate, die Trivinylether oder die Trimethacrylate von Triolen wie beispielsweise Trimethylolpropan, ethoxyliertem Trimethylolpropan mit 1 bis 20 Ethylenoxideinheiten, propoxyliertem Trimethylolpropan mit 1 bis 20 Propylenoxideinheiten, gemischt ethoxyliertem und propoxyliertem Trimethylolpropan bei dem die Summe aus Ethylenoxideinheiten und Propylenoxideinheiten 1 bis 20 beträgt. Monomere Mittel mit drei vernetzungsfähigen Gruppen sind beispielsweise auch die Triacrylate, die Trivinylether oder die Trimethacrylate von Glycerin, ethoxyliertem Glycerin mit 1 bis 20 Ethylenoxideinheiten, propoxyliertem Glycerin mit 1 bis 20 Propylenoxideinheiten, gemischt ethoxyliertem und propoxyliertem Glycerin, bei dem die Summe aus Ethylenoxideinheiten und Propylenoxideinheiten 1 bis 20 beträgt.

Monomere Mittel mit vier vernetzungsfähigen Gruppen sind beispielsweise die Tetraacrylate, die Tetravinylether oder die Tetramethacrylate von Tetraolen wie beispielsweise Bis-trimethylolpropan, ethoxyliertem Bis-trimethylolpropan mit 1 bis 20 Ethylenoxideinheiten, propoxyliertem Bis-trimethylolpropan mit 1 bis 20 Propylenoxideinheiten, gemischt ethoxyliertem und propoxyliertem Bis-trimethylolpropan, bei dem die Summe aus Ethylenoxideinheiten und Propylenoxideinheiten 1 bis 20 beträgt. Monomere Mittel mit vier vernetzungsfähigen Gruppen sind beispielsweise auch die Tetraacrylate, die Tetravinylether oder die Tetramethacrylate von Tetraolen wie beispielsweise Pentaerythrit, ethoxyliertem Pentaerythrit mit 1 bis 20 Ethylenoxideinheiten, propoxyliertem Pentaerythrit mit 1 bis 20 Propylenoxideinheiten, gemischt ethoxyliertem und propoxyliertem Pentaerythrit, bei dem die Summe aus Ethylenoxideinheiten und Propylenoxideinheiten 1 bis 20 beträgt.

Zur Erhöhung der Reaktivität bei der Vernetzung oder Polymerisation an Luft können die Bindemittel und die monomeren Mittel 0,1 bis 10 % eines primären oder sekundären Amins enthalten. Beispiele für geeignete Amine sind Ethanolamin, Diethanolamin oder Dibutylamin.

Ein geeignetes anorganisches Bindemittel, das in A und/oder C enthalten sein kann, ist beispielsweise SiO₂, das in Form von Wasserglas oder Silanen aufgebracht werden kann.

Die Absorptionspigmente bzw. -farbstoffe werden vorzugsweise in eine Schmelze oder eine Lösung des anorganischen Bindemittels eingerührt oder in anderer üblicher weise zugemischt. Das Aufbringen des pigment- bzw. farbstoffhaltigen Bindemittels erfolgt wie weiter unten beschrieben.

Besonders bevorzugt sind die Absorptionspigmente bzw. -farbstoffe von A und/oder C in eine Bindemittelmatrix eingebunden bzw. in einer solchen gelöst, die die weiter unten als Inhaltsstoffe von B beschriebenen cholesterischen Gemische enthält. Ganz besonders bevorzugt umfasst die Bindemittelmatrix von A und/oder C die gleichen cholesterischen Gemische wie B.

Die Herstellung der Absorptionspigmentformulierung kann nach den üblichen, in der Fachwelt bekannten Dispergierverfahren und unter Verwendung von Verdünnungsmitteln, Dispergiermitteln, Photoinitiatoren und gegebenenfalls weiteren Additiven erfolgen.

Die Herstellung der Absorptionsfarbstoffformulierung kann in bekannter Weise erfolgen, indem man den Farbstoff in einem der oben genannten Bindemittel oder in einem Bindemittelgemisch gegebenenfalls unter Verwendung von Verdünnungsmitteln, Photoinitiatoren und weiteren Additiven löst.

Als Verdünnungsmittel können Wasser oder organische Flüssigkeiten oder deren Mischungen verwendet werden, wobei organische Flüssigkeiten bevorzugt sind. Besonders bevorzugt sind organische Flüssigkeiten mit einem Siedepunkt unterhalb von 140 °C, insbesondere Ether wie Tetrahydrofuran, Ketone wie Ethylmethylketon und Ester wie Butylacetat.

Als Dispergiermittel können niedermolekulare Dispergiermittel wie beispielsweise Stearinsäure oder auch polymere Dispergiermittel verwendet werden. Geeignete polymere Dispergiermittel oder Dispergierharze sind dem Fachmann bekannt. Insbesondere sind zu nennen sulfonatgruppen-, phosphatgruppen- oder carboxylgruppenhaltige Polyurethane, carboxylgruppenhaltige Vinylchloridcopolymere, Polyiminpolyester oder Polyetheracrylate mit oder ohne eingebaute funktionelle Gruppen. Eine Gruppe bevorzugter Dispergiermittel ist z.B. bekannt aus der DE-A-195 16 784 oder der EP-A-0 742 238, worauf hiermit ausdrücklich Bezug genommen wird.

Für die Herstellung von vernetzbaren oder polymerisierbaren Absorptionspigmentformulierungen können für die photochemische Polymerisation handelsübliche Photoinitiatoren verwendet werden, beispielsweise die weiter unten für die photochemische Polymerisation der cholesterischen Gemische aufgeführten Photoinitiatoren.

In einer weiteren bevorzugten Ausführungsform der vorliegenden Erfindung enthalten A und/oder C ein Licht selektiv oder nicht selektiv absorbierendes, vorzugsweise vernetztes Polymer. Nicht selektiv absorbierende Polymere sind beispielsweise schwarze Polymere, wie Polypyrrol. Selektiv absorbierende Polymere sind beispielsweise farbige Polymere. Die absorbierenden Polymere können zur Variierung oder Verstärkung des gewünschten Absorptionseffektes die oben genannten Absorptionspigmente oder Absorptionsfarbstoffe eindispergiert bzw. in gelöster Form enthalten. Die absorbierenden Polymere können auch kovalent an das Polymer gebundene Chromophore enthalten.

Eine weitere bevorzugte Ausführungsform der vorliegenden Erfindung ist ein Mehrschichtpigment, wobei A und/oder C mindestens eine im Wesentlichen anorganische, Licht absorbierende Absorptionsschicht enthalten. Im Rahmen der vorliegenden Erfindung wird eine Schicht als im Wesentlichen anorganisch definiert, wenn sie organische Verbindungen (Kohlenstoffverbindungen) lediglich als Verunreinigungen (≤ 5 Gew.-%) enthält. Die anorganische Absorptionsschicht kann sowohl hochbrechende, selektiv oder nicht selektiv absorbierende Substanzen als auch niedrigbrechende, aber eine hohe Absorptionskonstante aufweisende, nicht selektiv absorbierende Substanzen umfassen, die selbstverständlich auch filmartig und dauerhaft abscheidbar sein müssen. Solche Substanzen sind beispielsweise in der EP-A-753 545 beschrieben, auf die hiermit in vollem Umfang Bezug genommen wird.

Als hochbrechende, für A und/oder C geeignete, Materialien sind z. B. nichtselektiv absorbierende Materialien, wie Metalle, Metalloxide, Metallsulfide und deren Mischungen, die auch selektiv absorbierende Metalloxide in untergeordneter Menge enthalten können, und selektiv absorbierende Materialien, wie insbesondere Metalloxide zu nennen, die in der Regel jeweils einen Brechungsindex n > 2,0, vorzugsweise n > 2,4, haben.

Im einzelnen seien folgende als für A und/oder C geeignete, nichtselektiv absorbierende hochbrechende Materialien beispielhaft genannt:
- Materialien, die durch Gasphasenzersetzung flüchtiger Metallverbindungen aufgebracht werden können, wie Molybdän, Eisen, Wolfram, Chrom, Cobalt und Nickel, sowie Gemische dieser Metalle; Metalle, die nasschemisch durch Reduktion aus Metallsalzlösungen abgeschieden werden können, wie Silber, Kupfer, Gold, Palladium und Platin sowie auch Cobalt und Nickel und Legierungen wie NiP, NiB, NiCo, NiWP, CoP und AgAu;
- Metalloxide, wie Magnetit Fe₃O₄, Cobaltoxid (CoO, Co₃O₄) und Vanadiumoxid (VO₂, V₂O₃), sowie auch Mischungen dieser Oxide mit den Metallen, wie insbesondere Magnetit und Eisen;
- Metallsulfide, wie Molybdänsulfid, Eisensulfid, Wolframsulfid, Chromsulfid, Cobaltsulfid und Nickelsulfid, sowie Gemische dieser Sulfide wie MoS₂/WS₂ und vor allem auch Gemische dieser Sulfide mit dem jeweiligen Metall, wie insbesondere MoS₂ und Molybdän, und Gemische mit Oxiden des jeweiligen Metalls, wie MoS₂ und Molybdänoxide.

Als nichtselektiv absorbierende hochbrechende Absorptionsschichten eignen sich z. B. auch Schichten farbloser hochbrechender Materialien, wie Zirkondioxid und insbesondere Titandioxid, in die nichtselektiv absorbierendes (schwarzes) Material (z. B. Kohlenstoff) eingebaut ist oder die mit diesem Material beschichtet sind.

Als Beispiele für selektiv absorbierende hochbrechende Materialien sind insbesondere farbige Oxide wie bevorzugt Eisen(II)oxid (α- und γ-Fe₂O₃, rot), Chrom (III) oxid (grün), Titan(III)oxid (Ti₂O₃, blau) und auch Vanadiumpentoxid (orange) sowie farbige Nitride, wie bevorzugt Titanoxynitrid und Titannitrid (TiOₓN_{y}, TiN, blau) zu nennen, wobei die niederen Titanoxide und -nitride in der Regel im Gemisch mit Titandioxid vorliegen.

Selbstverständlich können auch hier farblose hochbrechende Materialien, z. B. Metalloxide wie Zirkonoxid und insbesondere Titanoxid, verwendet werden, die mit selektiv absorbierenden Farbmitteln "eingefärbt" sind, was durch Einbau von Farbmitteln in die Metalloxidschicht, durch deren Dotierung mit selektiv absorbierenden Metallkationen oder durch Überziehen der Metalloxidschicht mit einem ein Farbmittel enthaltenden Film erfolgen kann.

Schließlich eignen sich als niedrigbrechende, nichtselektiv absorbierende Materialien mit hohen Absorptionskonstanten für A und/oder C insbesondere Metalle wie Aluminium.

Die Beschichtung soll nicht deckend, sondern für sichtbares Licht zumindest teilweise durchlässig (semi-transparent) sein und ist daher in Abhängigkeit von den optischen Eigenschaften der ausgewählten Schichtmaterialien unterschiedlich dick.

Die Schichtdicke der einzelnen Schichten von A und/oder C beträgt beim Einsatz im Wesentlichen anorganischer Absorptionsschichten für nicht-selektiv absorbierende hochbrechende Materialien, wie Metalle, schwarze Metalloxide und Sulfide, im Allgemeinen 1 bis 100 nm, wobei für stark absorbierende Metalle, wie Molybdän und Chrom, Schichtdicken von etwa 1 bis 25 nm, für schwächer absorbierende Materialien, wie Magnetit, Schichtdicken von etwa 10 bis 50 nm und für metallsulfidhaltige Materialien, wie MoS₂ enthaltende Schichten, Schichtdicken von 5 bis 20 nm bevorzugt sind.

Die Schichtdicke jeder einzelnen Schicht von A und/oder C beträgt beim Einsatz von Absorptionspigmenten oder absorbierenden Polymeren etwa 1 nm bis 5 µm, insbesondere etwa 5 nm bis 3 µm, wie z.B. etwa 5 bis 700 nm oder 5 bis 500 nm oder 5 bis 300 nm.

A und C können auch hinsichtlich ihrer mechanischen Eigenschaften gleich oder verschieden sein. Sie können beispielsweise unterschiedliche Dicke oder Sprödigkeit aufweisen.

Vorzugsweise beträgt die Schichtdicke jeder einzelnen cholesterischen Schicht von B 0,5 bis 20 µm, insbesondere etwa 1 bis 10 µm, besonders bevorzugt etwa 2 bis 4 µm oder 1 bis 2,5 µm oder 1 bis 1,5 µm.

Der Durchmesser der erfindungsgemäßen Pigmente beträgt 3 bis 500 µm, insbesondere etwa 3 bis 100 µm oder 10 bis 100 µm, besonders bevorzugt etwa 3 bis 30 µm. In der Regel beträgt der Pigmentdurchmesser etwa das 5- bis 20-fache der Pigmentdicke.

Die Gesamtdicke der erfindungsgemäßen Mehrschichtpigmente liegt z.B. bei weniger als etwa 30 µm, oder weniger als etwa 20 µm oder weniger als etwa 10 µm, wie z.B. etwa 1 bis 5 µm oder 1 bis 3 µm.

Vorteilhafterweise wird die Haftung zwischen Cholesterschicht B und Absorptionsschichten A bzw. C so gewählt, dass im wesentlichen keine Delamination beim Vermahlen des Schichtverbundes zum Pigment auftritt. Die Haftkraft zwischen Cholesterschicht und Absorptionsschicht liegt zweckmäßigerweise bei mehr als etwa 8 cN, insbesondere mehr als etwa 12 cN, wie z.B. bei etwa 15 bis 30 cN oder 18 bis 25 cN. Die Bestimmung der Haftkraft wird im experimentellen Teil genauer beschrieben.

Erfindungsgemäß geeignet sind auch Pigmente, deren absorbierende Schicht(en) A und/oder C magnetisch sind. Solche können vorteilhafterweise durch Anlegen eines Magnetfeldes beliebig orientiert werden. Beispielsweise kann so vermieden werden, dass einzelne Pigmentplättchen aus den anderen herausragen, was zur Folge hat, dass weniger Licht gestreut wird und der Farbeindruck besser wird. Alle Plättchen können gemeinsam in einem bestimmten Winkel orientiert werden. Es ist auch möglich, gesamtflächige Raster zum Erzielen neuer Farbeffekte oder partielle Raster zum optischen Herausheben von Schriften oder Strukturen zu erzeugen. Die erfindungsgemäßen, magnetischen cholesterischen Pigmente sind auch in einer flüssigen Matrix vorteilhaft einsetzbar, beispielsweise in LCDs, in denen sie bei Anlegen eines Magnetfeldes ihre Richtung und somit ihren Farbeindruck ändern.

Vorzugsweise enthält das Schichtpaket B der erfindungsgemäßen Pigmente cholesterische Gemische, die ausgewählt sind unter
a) mindestens einem cholesterischen, polymerisierbaren Monomer;
b) mindestens einem achiralen, nematischen, polymerisierbaren Monomer und einer chiralen Verbindung;
c) mindestens einem cholesterischen, vernetzbaren Oligomer oder Polymer; oder
d) einem cholesterischen Polymer in einem polymerisierbaren Verdünnungsmittel,
e) mindestens einem cholesterischen Polymer, dessen cholesterische Phase durch schnelles Abkühlen unter die Glasübergangstemperatur eingefroren werden kann,
in gehärtetem Zustand.

Durch Härtung wird die gleichmäßige Orientierung der cholesterischen Moleküle in der Cholesterschicht fixiert.

Bevorzugte Monomere der Gruppe a) sind in der DE-A-196 02 848 beschrieben, auf die hiermit in vollem Umfang Bezug genommen wird. Insbesondere umfassen die Monomere a) mindestens ein chirales, flüssigkristallines, polymerisierbares Monomer der Formel I 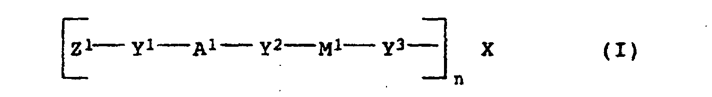 in der die Variablen die folgende Bedeutung haben:
- Z¹: eine polymerisierbare Gruppe oder ein Rest, der eine polymerisierbare Gruppe trägt,
- Y¹,Y²,Y³: unabhängig voneinander chemische Bindungen, Sauerstoff, Schwefel, ―CO―O―,―O―CO―,―O―CO―O―, ―CO―N(R)― oder ―N(R)―CO―,
- A¹: ein Spacer,
- M¹: eine mesogene Gruppe,
- X: ein n-wertiger chiraler Rest,
- R: Wasserstoff oder C₁-C₄-Alkyl,
- n: 1 bis 6
wobei die Reste Z¹, Y¹, Y², Y³, A¹ und M¹, gleich oder verschieden sein können, wenn n größer als 1 ist.

Als bevorzugte Monomere der Gruppe b) enthält das cholesterische Gemisch im erfindungsgemäßen Verfahren mindestens ein achirales flüssigkristallines polymerisierbares Monomer der Formel II

Z²―Y⁴―A²―Y⁵―M²―Y⁶―A³―(Y⁷―Z³)ₙ (II)

in der die Variablen die folgende Bedeutung haben:
- Z²,Z³: gleiche oder verschiedene polymerisierbare Gruppen oder Reste, die eine polymerisierbare Gruppe enthalten
- n: 0 oder 1
- Y⁴,Y⁵,Y⁶,Y⁷: unabhängig voneinander chemische Bindungen, Sauerstoff, Schwefel, ―CO―O―, ―O―CO―, ―O―CO―O―, ―CO―N(R)― oder ―N(R)―CO―,
- A²,A³: gleiche oder verschiedene Spacer und
- M²: eine mesogene Gruppe.

Außerdem enthält das Gemisch der Gruppe b) eine chirale Verbindung. Die chirale Verbindung bewirkt die Verdrillung der achiralen flüssigkristallinen Phase zu einer cholesterischen Phase. Dabei hängt das Ausmaß der Verdrillung von der Verdrillungsfähigkeit des chiralen Dotierstoffs und von seiner Konzentration ab. Damit hängt also die Ganghöhe der Helix und wiederum auch die Interferenzfarbe von der Konzentration des chiralen Dotierstoffs ab. Es kann daher für den Dotierstoff kein allgemeingültiger Konzentrationsbereich angegeben werden. Der Dotierstoff wird in der Menge zugegeben, bei der der gewünschte Farbeffekt entsteht.

Bevorzugte, mit den achiralen Verbindungen der Formel II kombinierbare chirale Verbindungen sind solche der Formel Ia 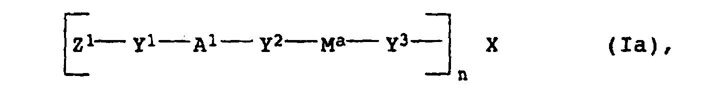 in der Z¹, Y¹, Y², Y³, A¹, X und n die obengenannten Bedeutung haben und M^{a} ein zweiwertiger Rest ist, der mindestens ein heterooder isocyclisches Ringsystem enthält.

Der Molekülteil M^{a} ähnelt dabei den beschriebenen mesogenen Gruppen, da auf diese Weise eine besonders gute Kompatibilität mit der flüssigkristallinen Verbindung erreicht wird. M^{a} muß jedoch nicht mesogen sein, da die Verbindung Ia lediglich durch ihre chirale Struktur eine entsprechende Verdrillung der flüssigkristallinen Phase bewirken soll. Weitere Monomere und chirale Verbindungen der Gruppe b) sind in der WO 97/00600 und der ihr zugrundeliegenden DE-A-195 324 08 beschrieben, auf die hiermit in vollem Umfang Bezug genommen wird.

Bevorzugte Polymere der Gruppe c) sind cholesterische Cellulosederivate, wie sie in der DE-A-197 136 38 beschrieben werden, insbesondere cholesterische Mischester von
(VI) Hydroxyalkylethern der Cellulose mit
(VII) gesättigten, aliphatischen oder aromatischen Carbonsäuren und
(VIII) ungesättigten Mono- oder Dicarbonsäuren.

Brauchbar sind außerdem vernetzbare Oligo- oder Polysiloxane, wie sie z. B. in der EP-A-0 358 208, DE-A-195 41 820 und DE-A-196 19 460 beschrieben sind.

Gut geeignete Polymere der Gruppe c) sind außerdem die in der DE-A-197 17 371 beschriebenen, propargylterminierten, cholesterischen Polyester oder Polycarbonate.

Als Polymere der Gruppe c) sind außerdem cholesterische Polycarbonate, die auch an nicht-terminaler Position photoreaktive Gruppen enthalten, geeignet. Solche Polycarbonate werden in der DE-A-196 31 658 beschrieben.

Geeignete Polymere der Gruppe e) sind chiral nematische Polyester mit flexiblen Ketten, die Isosorbid-, Isomannid- und/oder Isoidideinheiten, vorzugsweise Isosorbideinheiten, umfassen und zur Flexibilisierung der Ketten mindestens eine Einheit enthalten, die ausgewählt ist unter (und abgeleitet von)
(a) aliphatischen Dicarbonsäuren,
(b) aromatischen Dicarbonsäuren mit flexiblem Spacer,
(c) α,ω-Alkanoiden,
(d) Diphenolen mit flexiblem Spacer und
(e) Kondensationsprodukten aus einem Polyalkylenterephthalat oder Polyalkylennaphthalat mit einem acylierten Diphenol und einem acylierten Isosorbid,
wie sie in der DE-A-197 04 506 beschrieben werden.

Die Polyester sind nicht kristallin und bilden stabile Grandjean-Texturen aus, die sich beim Abkühlen unter die Glasübergangstemperatur einfrieren lassen. Die Glasübergangstemperaturen der Polyester wiederum liegen trotz der Flexibilisierung oberhalb von 80 °C, vorzugsweise oberhalb von 90 °C, insbesondere oberhalb von 100 °C.

Bevorzugte Polymere der Gruppe d) sind beispielsweise vernetzbare, cholesterische Copolyisocyanate, wie sie in der US-A-08 834 745 beschrieben werden.

Erfindungsgemäß ganz besonders bevorzugt enthält Schicht B chirale Verbindungen und nematische Monomere. gemäß Gruppe b), insbesondere chirale Verbindungen der Formel 2: 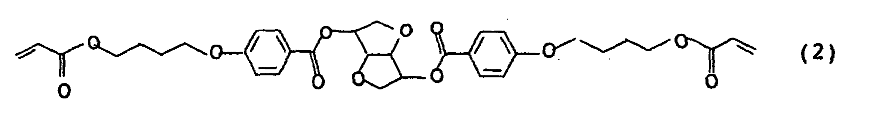 oder der Formel 5: 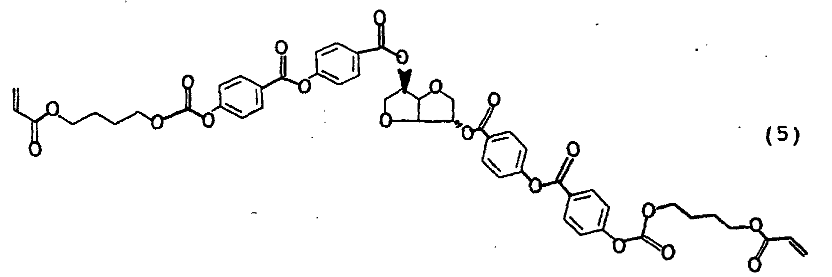 und nematische Monomere der Formel 1: 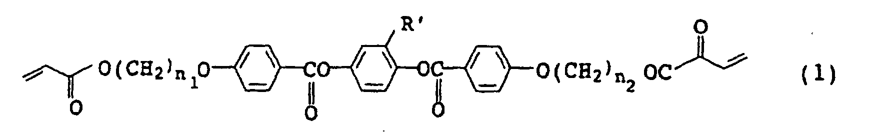 oder bevorzugt der Formel 3: 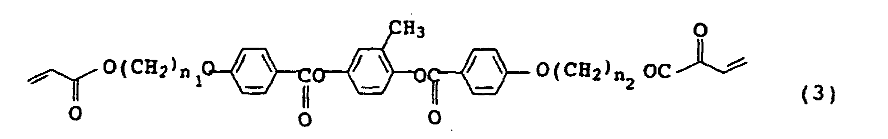 oder besonders bevorzugt der Formel 4: 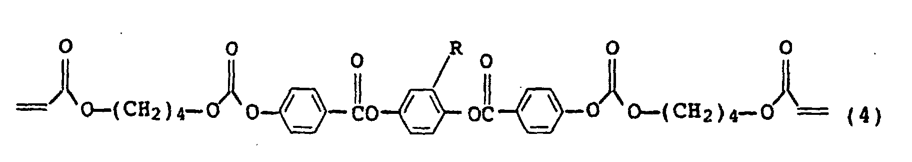 in gehärtetem Zustand, wobei in den Formeln 1 und 3 n₁ und n₂ unabhängig voneinander für 4 oder 6 stehen, R' in Formel 1 für H oder C1 steht, und die Monomeren der Formel 1 oder 3 vorzugsweise als Gemische von Verbindungen mit n₁/n₂ = 4/4, 4/6, 6/4 oder 6/6 eingesetzt werden, und R in Formel 4 für H, Cl oder CH₃ steht. Erfindungsgemäß können jedoch auch andere cholesterische Gemische, beispielsweise die in der EP-A-686 674 offenbarten Gemische, in gehärtetem Zustand in B enthalten sein.

Die cholesterischen Gemische bzw. die Absorptionspigment enthaltenden Formulierungen können mit jedem geeigneten Verdünnungsmittel vor dem Aufbringen auf den Träger verdünnt werden.

In dem erfindungsgemäßen Verfahren einsetzbare Verdünnungsmittel sind für die Verbindungen der Gruppen a) oder b) lineare oder verzweigte Ester, besonders Essigsäureester, cyclische Ether und Ester, Alkohole, Lactone, aliphatische und aromatische Kohlenwasserstoffe, wie Toluol, Xylol und Cyclohexan, sowie Ketone, Amide, N-Alkylpyrrolidone, besonders N-Methylpyrrolidon, und insbesondere Tetrahydrofuran (THF), Dioxan und Methylethylketon (MEK).

Geeignete Verdünnungsmittel für die Polymere der Gruppe c) sind beispielsweise Ether und cyclische Ether wie Tetrahydrofuran oder Dioxan, chlorierte Kohlenwasserstoffe, wie Dichlormethan, 1,1,2,2-Tetrachlorethan, 1-Chlornaphthalin, Chlorbenzol oder 1,2-Dichlorbenzol. Diese Verdünnungsmittel sind besonders für Polyester und Polycarbonate geeignet. Geeignete Verdünnungsmittel für Cellulosederivate sind beispielsweise Ether, wie Dioxan, oder Ketone, wie Aceton. Werden Copolyisocyanate als Polymere der Gruppe d) eingesetzt, ist es sinnvoll, polymerisierbare Verdünnungsmittel, wie in der US-A-08 834 745 beschrieben, zu verwenden.

Auch die Gemische der Gruppen a), b) oder c) können in kleinen Mengen polymerisierbare Verdünnungsmittel zusätzlich zu dem inerten Verdünnungsmittel enthalten. Bevorzugte, a), b) oder c) zusetzbare, polymerisierbare Lösungsmittel sind Acrylate, insbesondere höherfunktionelle Acrylate wie Bis, Tris- oder Tetraacrylate, besonders bevorzugt hochsiedende Oligoacrylate. Die bevorzugte Zusatmenge liegt bei etwa 5 Gew.-%, bezogen auf das Gesamtgewicht des Gemischs.

Das cholesterische Gemisch kann für die photochemische Polymerisation handelsübliche Photoinitiatoren enthalten. Für eine Härtung durch Elektronenstrahlen sind solche nicht notwendig. Geeignete Photoinitiatoren sind beispielsweise Isobutyl-benzoinether, 2,4,6-Trimethylbenzoyldiphenylphosphinoxid, 1-Hydroxycyclohexylphenylketon, 2-Benzyl-2-dimethylamino-1-(4-morpholinophenyl)-furan-1-on, Mischungen von Benzophenon und 1-Hydroxycyclohexyl-phenylketon, 2,2-Dimethoxy-2-phenylacetophenon, perfluorierte Diphenyltitanocene, 2-Methyl-1-(4-[methylthio] phenyl)-2-(4-morpholinyl)-1-propanon, 2-Hydroxy-2-methyl-1-phenylpropan-1-on, 4-(2-Hydroxyethoxy)phenyl-2-hydroxy-2-propylketon, 2,2-Diethoxyacetophenon, 4-Benzoyl-4'-methyldiphenyl-sulfid, Ethyl-4-(dimethylamino)benzoat, Mischungen von 2-Isopropylthioxanthon und 4-Isopropyl-thioxanthon, 2-(Dimethylamino)ethylbenzoat, d,1-Campherchinon, Ethyl-d,1-campherchinon, Mischungen von Benzophenon und 4-Methylbenzophenon, Benzophenon, 4,4'-Bisdimethylamin-benzophenon, (η⁵-Cyclopentadienyl) (η⁶-isopropylphenyl)-eisen(II)-hexafluorophosphat, Triphenylsulfonium-hexafluorophosphat oder Mischungen von Triphenylsulfoniumsalzen, sowie Butandioldiacrylat, Dipropylenglykoldiacrylat, Hexandioldiacrylat, 4-(1,1-Dimethylethyl)cyclohexylacrylat, Trimethylolpropantriacrylat und Tripropylenglykoldiacrylat.

Die Brillanz der cholesterischen Schicht(en) B kann durch Zugabe geringer Mengen geeigneter Verlaufsmittel gesteigert werden. Einsetzbar sind etwa 0,005 bis 1 Gew.-%, insbesondere 0,01 bis 0,5 Gew.-%, bezogen auf die Menge an eingesetztem Cholester. Geeignete Verlaufsmittel sind beispielsweise Glykole, Siliconöle und insbesondere Acrylatpolymere, wie die unter der Bezeichnung Byk 361 bzw. Byk 358 der Firma Byk-Chemie erhältlichen Acrylatcopolymere und die unter der Bezeichnung Tego flow ZFS 460 der Fa. Tego erhältlichen modifizierten silikonfreien Acrylatpolymere.

Vorzugsweise enthalten A und/oder C und gegebenenfalls B außerdem Stabilisatoren gegen UV- und Witterungseinflüsse in Einsatzmengen von etwa 0,1 bis 10 Gew.-%. Hierfür eignen sich zum Beispiel Derivate des 2,4-Dihydroxybenzophenons, Derivate des 2-Cyan-3,3-diphenylacrylates, Derivate des 2,2',4,4'-Tetrahydroxybenzophenons, Derivate des Orthohydroxyphenylbenztriazols, Salicylsäureester, Orthohydroxyphenyl-S-triazine oder sterisch gehinderte Amine. Diese Stoffe können allein oder vorzugsweise in Form von Gemischen eingesetzt werden.

Ein weiterer Gegenstand der vorliegenden Erfindung ist ein Verfahren zur Herstellung eines erfindungsgemäßen Pigments, das dadurch gekennzeichnet ist, dass man die Schichten A, B und gegebenenfalls C gleichzeitig oder zeitlich versetzt übereinander auf einen Träger aufbringt, gegebenenfalls gleichzeitig oder zeitlich versetzt thermisch, durch UV-Strahlen, Elektronenstrahlen oder durch schnelles Abkühlen unter die Glasübergangstemperatur härtet, die Schichten gemeinsam vom Träger entfernt und anschließend zu Pigmenten zerkleinert.

Das Aufbringen der Schichten A, B und gewünschtenfalls C auf den Träger kann mittels üblicher Verfahren erfolgen, beispielsweise ausgewählt unter Luft-Rakelbeschichtung, Rakelbeschichtung, Luftmesserbeschichtung, Quetschbeschichtung, Imprägnierbeschichtung, Umkehrwalzenbeschichtung, Transferwalzenbeschichtung, Gravurbeschichtung, "kiss coating", Gießbeschichtung, Spraybeschichtung, Spinnbeschichtung oder Druckverfahren, wie Hoch-, Tief-, Flexo-, Offset- oder Siebdruck. Vorzugsweise bringt man die Schichten A, B und gewünschtenfalls C mittels Gießbeschichtung oder Offset-Druck auf den Träger auf.

Wenn A und/oder C eine im Wesentlichen anorganische Absorptionsschicht enthalten, kann diese durch Physical Vapor Deposition (PVD) oder insbesondere durch Chemical Vapor Deposition (CVD) oder durch nasschemische Fällungsmethoden aufgebracht werden. Enthalten A und/oder C außer der anorganischen Absorptionsschicht noch weitere Schichten, beispielsweise Schichten aus farbigem Polymer oder pigmentierte oder farbstoffhaltige Absorptionsschichten, kann die anorganische Absorptionsschicht vor oder nach dem Aufbringen dieser anderen Schichten aufgebracht werden.

Ein weiterer Gegenstand der vorliegenden Erfindung ist ein plättchenförmiges cholesterisches Mehrschichtpigment, das dadurch gekennzeichnet ist, dass mindestens eine cholesterische Schicht B mit mindestens einer teilweise lichtdurchlässigen Absorptionsschicht A ummantelt ist, wobei A im Wesentlichen anorganisch und B wie oben beschrieben aufgebaut ist. Ebenfalls Gegenstand der vorliegenden Erfindung ist ein Verfahren zur Herstellung eines solchen Mehrschichtpigmentes, das dadurch gekennzeichnet ist, dass man zunächst Schicht B auf einen Träger aufbringt, diese härtet, die ausgehärtete Schicht vom Träger entfernt und zu Pigmenten zerkleinert und anschließend Schicht A auf die Pigmente aufbringt.

Das Aufbringen der im Wesentlichen anorganischen Schichten A und/ oder C kann beispielsweise nasschemisch oder mittels CVD erfolgen, wobei die Beschichtungsbedingungen so zu wählen sind, dass B nicht beschädigt wird.

Metallische Schichten A und/oder C werden bevorzugt durch Zersetzung von Metallcarbonylen wie Eisenpentacarbonyl, Chrom-, Molybdän- Wolframhexacarbonyl, Nickeltetracarbonyl und/oder Dicobaltoctacarbonyl bei 70 bis 300 °C unter inerten Bedingungen aufgebracht. Für die Zersetzung des besonders bevorzugten Mo(CO)₆ eignen sich dabei insbesondere Temperaturen von 200 bis 250 °C.

Zur Durchführung der CVD-Variante empfiehlt sich wie allgemein für CVD-Verfahren die Verwendung eines Wirbelschichtreaktors. Die aus einer Schicht oder mehreren Schichten B aufgebauten Pigmente werden im Reaktor unter Fluidisierung (Verwirbelung) mit einem inerten Wirbelgas, wie Stickstoff, auf die gewünschte Reaktionstemperatur (in der Regel 100 bis 300 °C, bevorzugt 150 bis 200 °C) erhitzt.

Aluminiumschichten A und/oder C können durch inerte Gasphasenzersetzung von Aluminiumorganylen, insbesondere Aluminiumalkylen oder Alkylaminaddukten von Aluminiumhydriden, abgeschieden werden.

Als Aluminiumalkyl eignen sich dabei neben Monoalkylaluminiumhydriden und -halogeniden vorzugsweise Dialkylaluminiumhydride und -halogenide und insbesondere Aluminiumtrialkyle, z. B. vor allem Triethyl- und Trimethylaluminium.

Verfahrenstechnisch geht man beim Aufbringen der Aluminiumschichten A und/oder C zweckmäßigerweise so vor, dass man das Aluminiumalkyl in einem dem Beschichtungsreaktor vorgeschalteten, schrittweise auf ca. 100 bis 150 °C erwärmten Verdampfergefäß als Lösung in einem schwerflüchtigen Kohlenwasserstoff, wie Petroleum, vorlegt, mit Hilfe eines durch diese Lösung geleiteten Inertgasstroms (z. B. Argon oder insbesondere Stickstoff) über eine vorzugsweise temperierte Düse in den Reaktor überführt und dort bei in der Regel 100 bis 300 °C, vorzugsweise 150 bis 400 °C, thermisch zersetzt, wobei die Gasmenge der flüchtigen Aluminiumverbindung im Allgemeinen nicht mehr als 2 Vol.-%, bevorzugt nicht mehr als 1 Vol.-%, der Gesamtmenge im Reaktor betragen sollte.

Als Reaktor wird insbesondere der oben erwähnte Wirbelschichtreaktor bevorzugt, man kann jedoch auch einen Einhalsrundkolben aus Quarzglas verwenden, der über einen Motor gedreht wird, mit Gaszu- und -ableitungen in der Drehachse versehen ist und von einem zweischaligen Klappofen beheizt wird (Drehkugelofen). Im Prinzip lässt sich auch jeder beheizbare Mischen der die aus B aufgebauten Pigmente mittels entsprechender Einbauten schonend bewegt und eine Gaszu- und -ableitung gestaltet, als Reaktor einsetzen. Für eine kontinuierliche Verfahrensführung in technischem Maßstab eignet sich z. B. auch ein Drehrohrofen, dem die aus B aufgebauten Pigmente und die Aluminiumalkyl/Inertgas-Mischung fortlaufend zugeführt werden.

Metallische Schichten A und/oder C können schließlich auch nasschemisch durch Reduktion aus geeigneten Metallsalzlösungen aufgebracht werden. Auf diese Weise können vor allem edlere Metalle, wie vor allem Silber, Kupfer, Gold, Cobalt, Nickel, Palladium und Platin, abgeschieden werden. Hierfür eignen sich eine Reihe von Reduktionsmitteln, insbesondere milde organische Reduktionsmittel, z. B. Zucker, wie Glucose und Dextrose, und auch Formaldehyd.

In der Regel werden jedoch die über die Gasphase aufgebrachten Metallschichten aufgrund ihrer höheren Qualität (feiner kristallin, filmartig) den nasschemisch aufgebrachten vorzuziehen sein, da sie meist brillantere und farbstärkere Pigmente ergeben.

Zur CVD-Abscheidung nichtselektiv absorbierender Schichten B, die im Wesentlichen aus niederen Metalloxiden (z. B. Fe₃O₄, VO₂, V₂O₃) bestehen, werden vorzugsweise Metallcarbonyle, wie Eisenpentacarbonyl, oder Oxychloride, wie Vanadiumoxychlorid, mit Wasserdampf zersetzt. Wenn bei der Gasphasenzersetzung zunächst höhere Metalloxide wie V₂O₅ entstehen, müssen diese anschließend z. B. mit Wasserstoff oder Ammoniak zum gewünschten Oxid reduziert werden.

Auch zur Erzeugung selektiv absorbierender Schichten B, die im Wesentlichen aus farbigen Metalloxiden und/oder Metallnitriden bestehen, eignen sich insbesondere bereits beschriebene CVD-Verfahren.

Aus dem Stand der Technik ist die Abscheidung von α-Eisen(III)-oxid, Chrom(III)oxid und Titan(III)oxid durch oxidative Zersetzung von Eisenpentacarbonyl und Chromhexacarbonyl hinlänglich bekannt.

Nasschemisch können α-Fe₂O₃- und Cr₂O₃-Schichten durch hydrolytische Zersetzung von Eisen(III)salzen, wie Eisen(III)chlorid und -sulfat bzw. Chrom(III)chlorid, und anschließendes Überführen der gebildeten hydroxidhaltigen Schichten durch Tempern in die Oxidschichten aufgebracht werden.

Die Belegung mit selektiv absorbierendem γ-Fe₂O₃ (B) kann nach bekannten CVD-Verfahrensvarianten erfolgen, indem zunächst durch Zersetzung von Fe(CO)₅ in Gegenwart von Wasserdampf ein Magnetitfilm abgeschieden wird, der anschließend mit Luft zu γ-Fe₂O₃ oxidiert wird, oder zunächst durch oxidative Zersetzung von Fe(CO)₅ ein α-Fe₂O₃-Film abgeschieden wird, der mit Wasserstoff zu eisen(III)haltigen Produkten reduziert und anschließend mit Luft zu γ-Fe₂O₃ oxidiert wird.

Vanadium(V)oxidschichten B können schließlich durch Gasphasenzersetzung von Vanadiumoxychlorid mit Wasserdampf abgeschieden werden.

Zur Herstellung "eingefärbter" TiO₂-Schichten sei auf die Angaben in der DE-A-44 37 753 verwiesen.

Der erfindungsgemäß zu beschichtende Träger ist vorzugsweise beweglich, besonders bevorzugt beweglich und bandförmig.

Als Schichtträger dienen vorzugsweise bekannte Filme aus Polyestern, wie Polyethylenterephthalat oder Polyethylennaphthalat sowie Polyolefinen, Cellulosetriacetat, Polycarbonaten, Polyamiden, Polyimiden, Polyamidoimiden, Polysulfonen, Aramiden, aromatischen Polyamiden, Polypropylen oder PVC. Die Dicke der Schichtträger beträgt vorzugsweise etwa 5 bis 100 µm, insbesondere etwa 10 bis 20 µm. Der Schichtträger kann vorher einer Koronaentladungsbehandlung, einer Plasmabehandlung, einer leichten Adhäsionsbehandlung, einer Wärmebehandlung, einer Staubentfernungsbehandlung oder ähnlichem unterworfen werden. Der Schichtträger weist vorzugsweise eine mittlere Mittellinien-Oberflächenrauhigkeit von 0,03 µm oder weniger, insbesondere von 0,02 µm oder weniger, besonders bevorzugt von 0,01 µm oder weniger auf. Außerdem ist es erwünscht, dass der Träger nicht nur eine derart geringe mittlere Mittellinien-Oberflächenrauhigkeit aufweist, sondern auch keine großen Vorsprünge (Erhebungen) von 1 µm oder mehr besitzt. Das Rauhigkeitsprofil der Oberfläche des Trägers kann durch Füllstoffe, die dem Schichtträger bei dessen Herstellung zugesetzt werden, variiert werden. Beispiele für geeignete Füllstoffe sind Oxide und Carbonate von Ca, Si und Ti sowie organische feine Pulver von Acrylsubstanzen.

Der Träger kann auch eine metallisierte Folie, ein vorzugsweise poliertes Metallband oder eine Zylinderwalze sein.

B und organische Verbindungen enthaltende Schichten A und C können niedrig- oder hochviskos, vorzugsweise jedoch niedrigviskos auf den Träger aufgebracht werden. Zu diesem Zweck können die cholesterischen Gemische bzw. die Absorptionspigment, -farbstoff oder absorbierendes Polymer enthaltenden Formulierungen unverdünnt oder niedrigverdünnt bei erhöhter Temperatur oder hochverdünnt bei niedriger Temperatur auf den Träger aufgebracht werden. Es ist besonders bevorzugt, zwei oder drei Schichten A, B und gewünschtenfalls C in einem Auftragungsvorgang nass-in-nass auf den Träger aufzubringen, gegebenenfalls gemeinsam zu trocknen und danach gemeinsam zu härten.

Für den gleichzeitigen Auftrag nass-in-nass der genannten Schichten ist es besonders bevorzugt, wenn A und/oder C Absorptionspigmente oder -farbstoffe in einer Matrix aus dem gleichen cholesterischen Gemisch eingebunden oder gelöst enthalten, das auch in B enthalten ist. Hierdurch werden möglicherweise störende Schichtgrenzen zwischen A, B und C vermieden, so dass ein homogenes System erhalten wird, das im mittleren Bereich homogen verteilte Pigmente oder gleichmäßig gelöste Farbstoffe enthält.

Für das gleichzeitige Auftragen der genannten Schichten sind Gießverfahren besonders geeignet, insbesondere Messer- bzw. Rakelgießverfahren, Extrusions- bzw. Abstreifgießverfahren sowie das Kaskadengießverfahren.

Beim Messer- bzw. Rakelgießverfahren erfolgt das Auftragen der Flüssigkeit auf einen Träger durch einen Schlitz eines Gießerblocks, wobei die Schichtdicke über einen definierten Rakelspalt zwischen einer Walze, über die der Träger geführt wird und der Gießerkante eingestellt werden kann. Zum Auftragen der untersten (ersten) Schicht wird der erste Gießerblock gegen die Walze verstellt, zum Auftragen der zweiten Schicht wird ein zweiter Gießerblock gegen den ersten Gießerblock verstellt und zum Auftragen der optionalen dritten Schicht wird ein dritter Gießerblock gegen den zweiten verstellt. Alle zwei bzw. drei Flüssigkeiten laufen ihrem jeweiligen Gießrakel zu und werden gleichzeitig übereinander abgerakelt.

Beim Extrusions- bzw. Abstreifgießverfahren wird ein flexibler Träger, beispielsweise eine Folie, mit definierter Bahnspannung zwischen zwei Walzen an dem Gießerkopf vorbei geführt. Aus zwei bzw. drei parallelen, quer zur Bahnlaufrichtung angeordneten Gießschlitzen werden die der erwünschten Schichtstärke angepassten Flüssigkeitsmengen gleichzeitig auf das Substrat aufgebracht.

Beim Kaskadengießverfahren wird der Träger über eine Walze geführt. Die aufzubringenden Flüssigkeiten laufen aus verschiedenartig angeordneten Schlitzen übereinander und dann gemeinsam auf den Träger auf.

Selbstverständlich ist es auch möglich, zunächst nur eine Schicht aufzubringen, diese gegebenenfalls zu trocknen und zu härten und dann zwei Schichten nass-in-nass beispielsweise mit einem der oben aufgeführten Verfahren auf die gehärtete Schicht aufzutragen. Ebenso kann jede Schicht einzeln nacheinander aufgetragen, gegebenenfalls getrocknet und gehärtet werden.

Wenn man Gießverfahren einsetzt, weist das gießfähige, cholesterische Gemisch vorzugsweise eine Viskosität im Bereich von etwa 10 bis 500 mPas, insbesondere etwa 10 bis 100 mPas, gemessen bei 23 °C, auf. Besonders bevorzugt bringt man das cholesterische Gemisch mit einer Geschwindigkeit von etwa 1 bis 800 m/min, insbesondere etwa 5 bis 100 m/min, auf den Träger auf. Vorzugsweise wird eine Gießvorrichtung verwendet, deren Gießspaltbreite im Bereich von etwa 2 bis 50 µm, insbesondere etwa 4 bis 15 µm liegt. Vorzugsweise erfolgt der Auftrag des cholesterischen Gemischs unter erhöhtem Druck, insbesondere bei einem Gießerüberdruck im Bereich von etwa 0,01 bis 0,7 bar, besonders bevorzugt 0,05 bis 0,3 bar.

Das Entfernen der ausgehärteten Schichten vom Träger kann zum Beispiel dadurch erfolgen, dass dieser über eine Umlenkrolle mit kleinem Durchmesser geführt wird. Infolgedessen blättert das vernetzte Material dann von dem Träger ab. Weitere bekannte Methoden sind gleichfalls geeignet, zum Beispiel das Abziehen des Trägers über eine scharfe Kante, Air Knife (Luftrakel), Ultraschall oder Kombinationen davon. Das nun trägerlose cholesterische Material wird auf eine gewünschte Korngröße zerkleinert. Dies kann beispielsweise durch Mahlen in Universalmühlen erfolgen. Die zerkleinerten Pigmente können anschließend zur Verengung der Korngrößenverteilung, beispielsweise durch einen Siebprozess, klassiert werden.

Ein weiterer Gegenstand der vorliegenden Erfindung sind Zusammensetzungen, die erfindungsgemäße Pigmente enthalten.

Besonders bevorzugte erfindungsgemäße Zusammensetzungen sind Überzugs- oder Beschichtungsmittel wie z. B. Farben und Lacke, die neben den erfindungsgemäßen Pigmenten eine oder mehrere Substanzen enthalten, die ausgewählt ist bzw. sind unter Wasserlakken, beispielsweise in Form von wässrigen Dispersionen, wie PMA, SA, Polyvinyl-Derivate, PVC, Polyvinylidenchlorid, SB-Copo, PV-AC-Copo-Harze, oder in Form von wasserlöslichen Bindemitteln, wie Schellack, Maleinharze, Kolophonium-modifizierte Phenolharze, lineare und verzweigte, gesättigte Polyester, Aminoplast-vernetzende, gesättigte Polyester, Fettsäure-modifizierte Alkydharze, plastifizierte Harnstoffharze, oder in Form von wasserverdünnbaren Bindemitteln, wie PUR-Dispersionen, EP-Harze, Harnstoffharze, Melaminharze, Phenolharze, Alkydharze, Alkydharzemulsionen, Siliconharzemulsionen; Pulverlacken, wie beispielsweise Pulverlacken für TRIBO/ES, wie Polyester-Beschichtungspulverharze, PUR-Beschichtungspulverharze, EP-Beschichtungspulverharze, EP/SP-Hybrid-Beschichtungspulverharze, PMA-Beschichtungspulverharze, oder Pulverlacke für Wirbelsintern, wie thermoplastifiziertes EPS, LD-PE, LLD-PE, HD-PE; lösemittelhaltigen Lacken, beispielsweise als Ein- und Zweikomponenten-Lacke (Bindemittel), wie Schellack, Kolophonium-Harzester, Maleinatharze, Nitrocellulosen, Kolophonium-modifizierte Phenolharze, physikalisch trocknende, gesättigte Polyester, Aminoplast-vernetzende, gesättigte Polyester, Isocyanat-vernetzende, gesättigte Polyester, selbstvernetzende, gesättigte Polyester, Alkyde mit gesättigten Fettsäuren, Leinölalkydharze, Sojaölharze, Sonnenblumenölalkydharze, Safflorölalkydharze, Ricinenalkydharze, Holzöl-/Leinölalkydharze, Mischölalkydharze, harzmodifizierte Alkydharze, Styrol/Vinyltoluolmodifizierte Alkydharze, acrylierte Alkydharze, Urethan-modifizierte Alkydharze, Silicon-modifizierte Alkydharze, Epoxid-modifizierte Alkydharze, Isophthalsäure-Alkydharze, nichtplastifizierte Harnstoffharze, plastifizierte Harnstoffharze, Melaminharze, Polyvinylacetale, nichtvernetzende P(M)A-Homo- bzw. Copolymerisate, nichtvernetzende P(M)A-Homo- bzw. Copolymerisate mit Nichtacrylmonomeren, selbstvernetzende P(M)A-Homo- bzw. Copolymerisate, P(M)A-Copolymerisate mit anderen Nichtacrylmonomeren, fremdvernetzende P(M)A-Homo- bzw. Copolymerisate, fremdvernetzende P(M)A-Copolymerisate mit Nichtacrylmonomeren, Acrylat-Copolymerisationsharze, ungesättigte Kohlenwasserstoffharze, organisch lösliche Celluloseverbindungen, Silicon-Kombiharze, PUR-Harze, P-Harze, Peroxid-härtende, ungesättigte Kunstharze, strahlenhärtende Kunstharze, photoinitiatorhaltig, strahlenhärtende Kunstharze photoinitiatorfrei; lösemittelfreien Lacken (Bindemittel), wie Isocyanat-vernetzende, gesättigte Polyester, PUR-2K-Harzsysteme, PUR-1K-Harzsysteme feuchtigkeitshärtend, EP-Harze, sowie Kunstharze - einzeln oder in Kombination -, wie Acrylnitril-Butadien-Styrol-Copolymere, BS, Celluloseacetat, Celluloseacetobutyrat, Celluloseacetopropionat, Cellulosenitrat, Cellulosepropionat, Kunsthorn, Epoxidharze, Polyamid, Polycarbonat, Polyethylen, Polybutylenterephthalat, Polyethylenterephthalat, Polymethylmethacrylat, Polypropylen, Polystyrol, Polytetrafluorethylen, Polyvinylchlorid, Polyvinylidenchlorid, Pulyurethan, Styrol-Acrylnitril-Copolymere, ungesättigte Polyesterharze als Granulate, Pulver oder Gießharz.

Die erfindungsgemäßen Zusammensetzungen können außerdem Stabilisatoren gegen UV- und Wettereinflüsse sowie anorganische oder organische Pigmente enthalten, wie oben beschrieben.

Die erfindungsgemäßen Pigmente können einzeln oder in Mischungen in die erfindungsgemäßen Zusammensetzungen eingearbeitet und dort gegebenenfalls zusätzlich durch Scherkräfte auslösende Methoden ausgerichtet werden. Geeignete Methoden zur Ausrichtung der erfindungsgemäßen Pigmente sind Drucken und Kakeln oder, bei magnetischen Pigmenten, Anlegen eines äußeren magnetischen Feldes.

Ein weiterer Gegenstand der vorliegenden Erfindung sind Beschichtungsmittel, die wenigstens ein erfindungsgemäßes Mehrschichtpigment enthalten, vorzugsweise Beschichtungsmittel, die ausgewählt sind unter Effektlacken, -Farben oder -folien, insbesondere unter selbstdeckenden Effektlacken, -farben oder -folien.

Ein weiterer Gegenstand der vorliegenden Erfindung ist die Verwendung der erfindungsgemäßen Pigmente zur Einfärbung von Kunststoffen oder Folien, im Fahrzeug- und Fahrzeugzubehörsektor, im Freizeit-, Sport- und Spielsektor, in der dekorativen Kosmetik, im Textil-, Leder- oder Schmuckbereich, im Geschenkartikelbereich, in Schreibutensilien, Emballagen oder Brillengestängen, im Bausektor, im Haushaltssektor sowie bei Druckerzeugnissen aller Art, wie beispielsweise Kartonagen, Verpackungen, Tragetaschen, Papieren oder Etiketten.

Die durch die erfindungsgemäßen cholesterischen Pigmente erzielbaren Farbeffekte umfassen, bedingt durch die Vielfalt der erzielbaren Reflexionswellenlängen, auch den UV- und den IR-Bereich sowie selbstverständlich den Bereich des sichtbaren Lichtes. Werden die erfindungsgemäßen Pigmente auf Banknoten, Scheckkarten, andere bargeldlose Zahlungsmittel oder Ausweise aufgebracht (beispielsweise durch bekannte Druckverfahren) oder in sie eingearbeitet, erschwert dies das identische Kopieren, insbesondere das Fälschen dieser Gegenstände erheblich. Ein weiterer Gegenstand der vorliegenden Erfindung ist somit die Verwendung der erfindungsgemäßen Pigmente zur fälschungserschwerenden Bearbeitung von Gegenständen, insbesondere von Banknoten, Scheckkarten oder anderen bargeldlosen Zahlungsmitteln oder Ausweisen.

Ein weiterer Gegenstand der vorliegenden Erfindung ist die Verwendung der erfindungsgemäßen Zusammensetzungen zur Beschichtung von Gebrauchsgegenständen und zur Lackierung von Fahrzeugen.

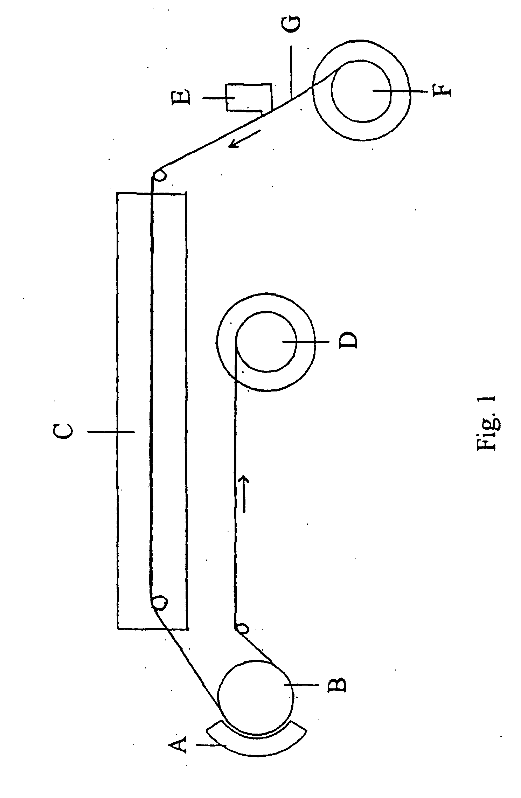

Die Erfindung wird nun anhand der folgenden Ausführungsbeispiele und unter Bezugnahme auf beiliegende Figur näher erläutert. Dabei zeigt
Figur 1: die schematische Darstellung einer erfindungsgemäß einsetzbaren Beschichtungsapparatur.

### Beispiel: Herstellung eines semitransparenten cholesterischen Effektpigments

### a) Herstellung der Cholesterschicht

Die Herstellung der Cholesterschicht erfolgte nach dem in der DE 197 38 369.6 oder der PCT/EP 98/05544 beschriebenen Gießverfahren, worauf hiermit ausdrücklich Bezug genommen wird.

Es wurde eine cholesterische Mischung der oben beschriebenen Gruppe b) eingesetzt, die als chirales Monomer eine Verbindung der oben angegebenen Formel 2 und als achirales, nematisches Monomer ein Gemisch von Verbindungen der oben angegebenen Formel 3 enthielt. Das unverdünnte cholesterische Gemisch enthielt 90,5 Gew.-% der achiralen, nematischen Verbindung, 6,5 Gew.-% der chiralen Verbindung und als Photoinitiator 3 Gew.-% 1-Hydroxycyclohexylphenylketon, das unter der Bezeichnung Irgacure 184 vertrieben wird. Die cholesterische Mischung wurde mit Methylethylketon auf einen Feststoffgehalt von 50 Gew.-%, bezogen auf das Gesamtgewicht der Beschichtungsmasse verdünnt. Als Verlaufmittel wurden 0,1 Gew.-% Byk 361 zugesetzt.

Die Beschichtung erfolgte mit einer Beschichtungsapparatur, die in Figur 1 schematisch dargestellt ist. Eine Polyethylenterephthalatfolie (PET-Folie) (G) mit einer Dicke von 15 µm wurde vom Folienwickel (F) kontinuierlich abgerollt und mit einem Messergießer (E) beschichtet. Der Gießüberdruck betrug etwa 2·10⁴ Pa. Die Trocknung erfolgte bei 60 °C im Trockner (C). Die Verweilzeit im Trockner betrug 12 Sekunden. Die Härtung der Schicht erfolgte durch UV-Fixierung in der UV-Anlage (A) während das getrocknete Band über die Kühlwalze (B) geführt wurde. Die gehärtete cholesterenschicht wurde auf die Rolle (D) aufgewickelt. Die Dicke der trockenen cholesterischen Schicht betrug 2,1 µm.

### b) Aufbringen der Absorptionsschicht

Für die Auftragung auf die gemäß Stufe a) erhaltene Cholesterschicht wurde eine Beschichtungsmasse nachfolgender Zusammensetzung hergestellt:

In einem Laborkneter mit einem Nutzvolumen von 300 ml wurden 150 g Farbruß Regal 400R (Cabot Corporation) mit 3 g Stearinsäure, 80 g eines phosphorhaltigen Dispergierharzes (Disperdur-Phosphonat; K-Wert=22; M_{w}=11000) 50%ig in Tetrahydrofuran, beschrieben in DE-A-195 16 784, und 40 g Methylethylketon 1 Stunde geknetet. Die daraus resultierende Knetmasse wurde anschließend in einem Dissolver mit Methylethylketon auf einen Feststoffgehalt von 25% eingestellt. Diese Dispersion wurde danach in einer Rührwerksmühle (Typ Dispermat SL, Mahlkammervolumen 125 ml, Mahlkörper zirkonoxid 1-1,25 mm) optimal ausdispergiert. Der Dispergierfortschritt wurde dabei mittels eines Interferenzkontrastverfahrens (EP-B-0 032 710) verfolgt. Die Endfeinheit war erreicht, wenn die zu prüfende Oberfläche agglomeratfrei war. In dieses feinst dispergierte Gemisch wurden in vier Ansätzen verschiedene Mengen eines Co-Bindemittels mit Hilfe eines Dissolvers intensiv eingearbeitet. Als Co-Bindemittel wurde ein sulfonathaltiges Polyurethan (Morthane CA 152, K-Wert=48; M_{w}=20000; der Fa. Morton International) eingesetzt.

Bezogen auf Gewichtsteile Ruß wurden in den vier Ansätzen folgende Gesamtbindemittelanteile (Summe aus Disperdur-Phosphonat und Morthane CA 152) eingestellt:

| Ansatz | Ruß: Gesamtbindemittel |
|---|---|
| 1 | 1 : 2 |
| 2 | 1 : 3 |
| 3 | 1 : 4 |
| 4 | 1 : 5 |

Diese verschieden modifizierten Rußdispersionen wurden in einer Schichtdicke von 0,6 ± 0,1 µm auf die Cholesterschicht aufgertragen. Das Beschichtungsverfahren entsprach abgesehen von der hier nicht erforderlichen UV-Härtung dem von Stufe a).

### c) Entfernen des Schichtverbundes von der Trägerfolie

Der aus Stufe b) erhaltene Zweischichtverbund wurde von der Trägerfolie entfernt, indem der Verbund quer zur Folienbahnrichtung mit einer Rasierklinge angeritzt und dann mit Druckluft aus einer Schlitzdüse abgeblasen wurde. Die beschichtete Folie wurde dabei kontinuierlich an der Schlitzdüse vorbeigeführt und der abgeblasene Verbund wurde in Form von Flocken aufgefangen.

### d) Mahlen der Flocken zu einem Pigment

10 g Cholesterflocken, hergestellt wie unter c) beschrieben, wurden mit 100 g Natriumchlorid gemischt und 6 mal 2 Minuten in einer Schlagmessermühle gemahlen. Nach dem Mahlen wurde das Salz mit Wasser herausgewaschen und das Pigment isoliert. Die Dicke der erhaltenen Pigmente betrug etwa 2,7 µm bei einem mittleren Durchmesser von etwa 25 µm.

### e) Mechanische Eigenschaften des Schichtverbundes und der Pigmente

Für obige vier Ansätze wurden folgende Parameter untersucht:
(1) Haftung der Absorptionsschicht auf der Cholesterschicht
(2) Schichtablösung vom Substrat
(3) Delaminationsneigung beim Vermahlen von Pigmenten

Die Ergebnisse sind in nachfolgender Tabelle zusammengefaßt:

| Ansatz | Haftung Absorptionsschicht auf LC-Schicht | Schichtablösung vom Substrat | Delaminierungsneigung Absorberschicht auf LC-Schicht beim Mahlen |
|---|---|---|---|
| 1 | 7cN | gut | groß |
| 2 | 8cN | gut | mäßig |
| 3 | 20cN | gut | keine |
| 4 | 22cN | gut | keine |

Die Haftkraft wurde dabei wie folgt bestimmt:

Auf einer ebenen Metallplatte wird ein etwa 5 cm langes Stück Klebeband fixiert. Als Klebeband kann jedes handelsübliche Klebeband verwendet werden, das mit einer PET-Referenzfolie eine Haftkraft unter ansonsten gleichen Meßbedingungen von etwa 7,3 bis 7,9 cN, insbesondere etwa 7,6 cN, ergibt. Als PET-Referenzfolie dient hier eine PET-Folie, Typ E2R, der Firma Teijin, Dicke 9 µm, Breite 6,35 mm, Oberflächenrauhigkeit nach DIN 4768: Rz = 0,86 µm, nach DIN 4768/1: Ra = 0,012 µm, nach EP-B-0 032 710 (Interferenzkontrastverfahren): 75 bis 125 nm. Die Klebeschicht ist nach oben gerichtet und von der Platte abgewandt. Aus dem ausgehärteten, noch auf der Trägerfolie haftenden Schichtverbund wird eine Probe (Länge ca. 10 cm, Breite 6,35 mm) ausgeschnitten. Der zu messende Verbund, bestehend aus dem Schichtträger und dem Zweischichtverbund, wird so aufgebracht, dass die Absorptionsschicht mit der Klebeschicht in Kontakt kommt. Das freie Ende des aufgeklebten Verbundes wird nun so abgebogen, dass es einen Winkel von 160° mit der Ebene der Metallplatte bildet. Mit einer konstanten Geschwindigkeit von 0,1 mm pro Sekunde wird nun das freie gegen das aufgeklebte Bandende gezogen, wobei die Zugkraft im Band ständig zunimmt, bis der Schichtverbund aufreißt. Im weiteren Verlauf der Messung wird die Haftfestigkeit zwischen Cholesterschicht und Absorptionsschicht gemessen. Die Zugspannungen im Band werden mit einem hochauflösenden Sensor erfasst und als Abzugskraft in cN mit einem y-T-Schreiber registriert.

## Patentansprüche

1. Plättchenförmiges cholesterisches Mehrschichtpigment, **gekennzeichnet durch** das Aufeinanderfolgen der Schichten A/B/und gegebenenfalls C,
wobei
A und C unabhängig voneinander für mindestens eine teilweise lichtdurchlässige Absorptionsschicht stehen, und
B für mindestens eine cholesterische Schicht steht; und
die Haftkraft zwischen cholesterischer Schicht und Absorptionsschicht mehr als 8 cN beträgt.

2. Mehrschichtpigment nach einem der vorhergehenden Ansprüche,
wobei A und/oder C mindestens ein anorganisches oder organisches Absorptionspigment oder einen Absorptionsfarbstoff, gegebenenfalls in einer anorganischen oder organischen Bindemittelmatrix enthalten.

3. Mehrschichtpigment nach einem der vorhergehenden Ansprüche,
wobei A und/oder C eine absorbierende Polymerschicht enthalten.

4. Mehrschichtpigment nach einem der vorhergehenden Ansprüche,
wobei A und/oder C mindestens eine anorganische Absorbtionsschicht enthalten, die höchstens 5 Gew.-% organische Verbindung enthält.

5. Mehrschichtpigment nach einem der vorhergehenden Ansprüche,
wobei die Schichtdicke jeder einzelnen cholesterischen Schicht von B 0,5 bis 20 µm beträgt.

6. Mehrschichtpigment nach einem der vorhergehenden Ansprüche,
wobei die Schichtdicke jeder einzelnen Schicht von A und/oder C 1 nm bis 5 µm beträgt.

7. Mehrschichtpigment nach einem der vorhergehenden Ansprüche, dessen Durchmesser 3 bis 500 µm beträgt.

8. Mehrschichtpigment nach einem der vorhergehenden Ansprüche mit einer Gesamtschichtdicke von 1 bis 3 µm.

9. Mehrschichtpigment nach einem der vorhergehenden Ansprüche,
wobei B cholesterische Gemische, die ausgewählt sind unter
a) mindestens einem cholesterischen, polymerisierbaren Monomer;
b) mindestens einem achiralen, nematischen, polymerisierbaren Monomer und einer chiralen Verbindung;
c) mindestens einem cholesterischen, vernetzbaren Polymer; oder
d) einem cholesterischen Polymer in einem polymerisierbaren Verdünnungsmittel,
e) mindestens einem cholesterischen Polymer, dessen cholesterische Phase durch schnelles Abkühlen unter die Glasübergangstemperatur eingefroren werden kann,
in gehärtetem Zustand enthält.

10. Mehrschichtpigment nach einem der vorhergehenden Ansprüche,
wobei A und/oder C eine Bindemittelmatrix enthalten, die wenigstens ein cholesterisches Gemisch gemäß der Definition in Anspruch 9 umfasst.

11. Mehrschichtpigment nach Anspruch 10, wobei A, B und gegebenenfalls C die gleichen cholesterischen Gemische umfassen.

12. Mehrschichtpigment nach einem der vorhergehenden Ansprüche,
wobei A und/oder C magnetisch sind.

13. Mehrschichtpigment nach einem der vorhergehenden Ansprüche,
wobei A und/oder C und gegebenenfalls B außerdem Stabilisatoren gegen UV- und Witterungseinflüsse enthalten.

14. Verfahren zur Herstellung eines Mehrschichtpigmentes nach einem der vorhergehenden Ansprüche, **dadurch gekennzeichnet, dass** man die Schichten A, B und gegebenenfalls C gleichzeitig oder zeitlich versetzt übereinander auf einen Träger aufbringt, gegebenenfalls gleichzeitig oder zeitlich versetzt härtet, die Schichten gemeinsam vom Träger entfernt und anschließend zu Mehrschichtpigmenten zerkleinert.

15. Plättchenförmiges cholesterisches Mehrschichtpigment, **dadurch gekennzeichnet, dass** mindestens eine cholesterische Schicht B mit einer mindestens teilweise lichtdurchlässigen Absorptionsschicht A ummantelt ist, wobei A wie in Anspruch 4 oder 6 definiert ist und B wie in einem der Ansprüche 5 oder 9 definiert ist.

16. Verfahren zur Herstellung eines Mehrschichtpigmentes nach Anspruch 15, **dadurch gekennzeichnet, dass** man zunächst Schicht B auf einen Träger aufbringt, diese härtet, die ausgehärtete Schicht vom Träger entfernt und zu Pigmenten zerkleinert und anschließend die Schicht A auf die Pigmente aufbringt.

17. Zusammensetzungen enthaltend wenigstens ein Mehrschichtpigment nach einem der Ansprüche 1 bis 13 oder 15.

18. Beschichtungsmittel, enthaltend wenigstens ein Mehrschichtpigment nach einem der Ansprüche 1 bis 13 oder 15.

19. Verwendung von Mehrschichtpigmenten nach einem der Ansprüche 1 bis 13 oder 15 im Fahrzeug- und Fahrzeugzubehörsektor, im EDV-, Freizeit-, Sport- und Spielsektor, als optische Bauelemente wie Polarisatoren oder Filter, im Kosmetikbereich, im Textil-, Leder- oder Schmuckbereich, im Geschenkartikelbereich, in Schreibutensilien oder auf Brillengestellen, im Bausektor, im Baushaltssektor, bei Druckerzeugnissen aller Art, zur Herstellung von Farben und Lacken sowie zur fälschungserschwerenden Bearbeitung von Gegenständen.

20. Verwendung einer Zusammensetzung nach Anspruch 17 zur Beschichtung von Gebrauchsgegenständen oder zur Lackierung von Fahrzeugen.

## Claims

1. A platelet-shaped cholesteric multilayer pigment which comprises the layer sequence A/B/ and if desired C,
where
A and C independently of one another are at least one partly light-permeable absorption layer, and
B is at least one cholesteric layer; and
the adhesive force between cholesteric layer and absorption layer is more than 8 cN.

2. A multilayer pigment as claimed in the preceding claim, where A and/or C comprise at least one organic or inorganic absorption pigment or an absorption dye, if desired in an organic or inorganic binder matrix.

3. A multilayer pigment as claimed in either of the preceding claims, where A and/or C comprise an absorbing polymer layer.

4. A multilayer pigment as claimed in any of the preceding claims, where A and/or C comprise at least one inorganic absorption layer comprising not more than 5% by weight of organic compound.

5. A multilayer pigment as claimed in any of the preceding claims, where the thickness of each individual cholesteric layer of B is from 0.5 to 20 µm.

6. A multilayer pigment as claimed in any of the preceding claims, where the thickness of each individual layer of A and/or C is from 1 nm to 5 µm.

7. A multilayer pigment as claimed in any of the preceding claims, whose diameter is from 3 to 500 µm.

8. A multilayer pigment as claimed in any of the preceding claims, having a total layer thickness of 1 to 3 µm.

9. A multilayer pigment as claimed in any of the preceding claims, where B comprises cholesteric mixtures selected from
a) at least one cholesteric, polymerizable monomer;
b) at least one achiral, nematic, polymerizable monomer and one chiral compound;
c) at least one cholesteric, crosslinkable polymer;
d) a cholesteric polymer in a polymerizable diluent;
e) at least one cholesteric polymer whose cholesteric phase can be frozen in by rapid cooling to below the glass transition temperature,
in the cured state.

10. A multilayer pigment as claimed in any of the preceding claims, where A and/or C comprise a binder matrix comprising at least one cholesteric mixture in accordance with the definition in claim 9.

11. A multilayer pigment as claimed in claim 10, where A, B and if desired C comprise the same cholesteric mixtures.

12. A multilayer pigment as claimed in any of the preceding claims, where A and/or C are magnetic.

13. A multilayer pigment as claimed in any of the preceding claims, where A and/or C and, if desired, B additionally comprise stabilizers to counter the effects of UV and weathering.

14. A process for producing a multilayer pigment as claimed in any of the preceding claims, which comprises applying the layers A, B and if desired C atop one another to a substrate, simultaneously or with a time differential, if desired, curing the layers, again simultaneously or with a time differential, removing the layers together from the substrate and then comminuting them to give multilayer pigments.

15. A platelet-shaped cholesteric multilayer pigment, which comprises at least one cholesteric layer B enveloped by an at least partly light-permeable absorption layer A, where A is as defined in Claim 4 or 6 and B is as defined in claim 5 or 9.

16. A process for preparing a multilayer pigment as claimed in claim 15, which comprises first applying layer B to a substrate, curing it, removing the cured layer from the substrate and comminuting it to form pigments, and then applying the layer A to the pigments.

17. A composition comprising at least one multilayer pigment as claimed in any of claims 1 to 13 or 15.

18. A coating material comprising at least one multilayer pigment as claimed in any of claims 1 to 13 or 15.

19. The use of a multilayer pigment as claimed in any of claims 1 to 13 or 15 in the vehicle and vehicle accessories sector, in the EDP, leisure, sport and games sector, as an optical component such as a polarizer or filter, in the cosmetics field, in the textile, leather or jewelry field, in the gift product field, in writing utensils or on spectacle frames, in the construction sector, in the domestic sector or in connection with a printed product of any kind, for preparing an ink or paint or for the anticounterfeiting treatment of an article.

20. The use of a composition as claimed in claim 17 for coating an article of utility or for painting a vehicle.

## Revendications

1. Pigment multicouche cholestérique lamellaire,
**caractérisé par** la succession des couches A/B/ et éventuellement C,
où
A et C, indépendamment l'une de l'autre, représentent au moins une couche d'absorption partiellement translucide, et
B représente au moins une couche cholestérique ; et
la force d'adhérence entre la couche cholestérique et la couche d'absorption est de plus de 8 cN.

2. Pigment multicouche selon l'une quelconque des revendications précédentes, où A et/ou C contiennent au moins un pigment d'absorption inorganique ou organique ou un colorant d'absorption, éventuellement dans une matrice de liant inorganique ou organique.

3. Pigment multicouche selon l'une quelconque des revendications précédentes, où A et/ou C contiennent une couche polymère absorbante.

4. Pigment multicouche selon l'une quelconque des revendications précédentes, où A et/ou C contiennent au moins une couche d'absorption inorganique, qui comprend au maximum 5 % en poids de composé organique.

5. Pigment multicouche selon l'une quelconque des revendications précédentes, où l'épaisseur de chaque couche cholestérique détachée de B est comprise entre 0,5 et 20 µm.

6. Pigment multicouche selon l'une quelconque des revendications précédentes, où l'épaisseur de chaque couche détachée de A et/ou C est comprise entre 1 nm et 5 µm.

7. Pigment multicouche selon l'une quelconque des revendications précédentes, dont le diamètre est compris entre 3 et 500 µm.

8. Pigment multicouche selon l'une quelconque des revendications précédentes avec une épaisseur totale de 1 à 3 µm.

9. Pigment multicouche selon l'une quelconque des revendications précédentes, où B contient des mélanges cholestériques, à l'état durci, choisis parmi
a) au moins un monomère cholestérique polymérisable ;
b) au moins un monomère non chiral, nématique, polymérisable et un composé chiral ;
c) au moins un polymère cholestérique réticulable ;
d) au moins un polymère cholestérique dans un diluant polymérisable ;
e) au moins un polymère cholestérique dont la phase cholestérique peut être congelée par refroidissement rapide en dessous de la température de transition vitreuse.

10. Pigment multicouche selon l'une quelconque des revendications précédentes, où A et/ou C contiennent une matrice de liant qui comprend au moins un mélange cholestérique selon la définition de la revendication 9.

11. Pigment multicouche selon la revendication 10, où A, B et éventuellement C comprennent les mêmes mélanges cholestériques.

12. Pigment multicouche selon l'une quelconque des revendications précédentes, où A et/ou C sont magnétiques.

13. Pigment multicouche selon l'une quelconque des revendications précédentes, où A et/ou C et éventuellement B contiennent en outre des stabilisateurs contre les U.V. et les intempéries.

14. Procédé de préparation d'un pigment multicouche selon l'une quelconque des revendications précédentes, **caractérisé en ce que** l'on dépose les couches A, B et éventuellement C l'une sur l'autre sur un support, simultanément ou en décalage dans le temps, on les durcit éventuellement simultanément ou en décalage dans le temps, on enlève les couches ensemble du support et ensuite, on les réduit en pigments multicouches.

15. Pigment multicouche cholestérique lamellaire, **caractérisé en ce qu'**au moins une couche cholestérique B est enveloppée par une couche d'absorption A au moins partiellement translucide, où A est tel que défini dans la revendication 4 ou 6 et B est tel que défini dans la revendication 5 ou 9.

16. Procédé de fabrication d'un pigment multicouche selon la revendication 15, **caractérisé en ce que** l'on dépose d'abord la couche B sur un support, on l'a durci, on enlève la couche durcie du support et on la réduit en pigments et ensuite, on dépose la couche A sur les pigments.

17. Compositions comprenant au moins un pigment multicouche selon l'une quelconque des revendications 1 à 13 ou 15.

18. Agent de revêtement, comprenant au moins un pigment multicouche selon l'une quelconque des revendications 1 à 13 ou 15.

19. Utilisation des pigments multicouches selon l'une des revendications 1 à 13 ou 15 dans le secteur automobile ou des accessoires automobiles, dans le secteur informatique, des loisirs, du sport et des jeux, en tant que composants optiques comme les polariseurs ou les filtres, dans le domaine des cosmétiques, dans le domaine du textile, du cuir ou de la bijouterie, dans le domaine des articles cadeaux, dans les stylos ou sur les montures de lunettes, dans le secteur du bâtiment, dans le secteur de l'entretien domestique, dans des produits d'impression de tout type, pour la fabrication de couleurs et de peintures ainsi que pour le traitement infalsifiable des objets.

20. Utilisation d'une composition selon la revendication 17 pour le revêtement d'objets d'usage ou pour la mise en peinture de véhicules.
